# EUROPEAN PATENT SPECIFICATION

(11) **EP 3 265 510 B1**
(45) Date of publication and mention of the grant of the patent: **26.08.2020**
(21) Application number: 16711078.2
(22) Date of filing: 04.03.2016
(51) Int. Cl.: C08K 5/06, C08G 18/76, C08G 18/42, C08G 18/48, C08L 75/04, C08L 27/06, C08L 67/00, C08J 7/04, C09D 127/06, C09D 167/00, C09D 5/00, C09D 7/20, C09J 5/02

(54) **SOLVENT BASED PRIMER COMPOSITION**
GRUNDIERUNGSZUSAMMENSETZUNG AUF LÖSUNGSMITTELBASIS
COUCHE DE FOND À BASE DE SOLVANTS

(30) Priority: 06.03.2015 US 201562129537 P
(43) Date of publication of application: 10.01.2018
(73) Proprietor: H. B. Fuller Company, St. Paul, Minnesota 55164-0683 (US)
(72) Inventor: GUMMERSHEIMER, Peter, P., D-66969 Lemberg (DE); SCHUH, Marc J., F-67110 Gumbrechtshoffen (FR)
(74) Representative: Maiwald Patent- und Rechtsanwaltsgesellschaft mbH
(86) International application number: PCT/US2016/020894
(87) International publication number: WO 2016/144756

(56) References cited:
- EP-A2- 0 643 116
- DE-A1-102009 045 025
- US-A1- 2014 182 620
- US-A1- 2014 262 020

## Description

### FIELD OF THE INVENTION

The present invention relates to a primer composition comprising 2,5,7,10-tetraoxaundecane (TOU). The invention also provides a method of surface-treating a substrate to improve adhesive bonding thereto. Moreover, the present invention is further directed to an article comprising a substrate surface-treated with the primer composition according to the invention.

### BACKGROUND OF THE INVENTION

Primer compositions or primers are employed in the art to improve the adhesion of adhesives or sealants to different substrates. The primer composition serves for improving the adhesion between a substrate surface-treated with the primer composition and the adhesive layer between the substrates to be bonded. Depending on the field of application, it is known to bond a variety of different substrates using a variety of different adhesives, wherein often special primer compositions are employed for specific kinds of substrates.

Some plastic materials such as polyvinyl chloride (PVC) or acrylonitrile-butadiene-styrene (ABS) are difficult to bond with adhesives such as reactive polyurethane hot melts (HMMC). Therefore, to improve adhesion on such substrates primer compositions have to be used which prepare the surface for being bonded with an adhesive. The primer composition creates on the surface of the substrate to be bonded a certain roughness and thus improves anchorage of an adhesive for final bonding.

Primer compositions for treating plastic materials such as PVC or ABS are known in the art. These primer compositions contain aggressive N-methyl-pyrrolidone (NMP) or N-ethyl-pyrrolidone (NEP) based solvents capable to dissolve or attack the plastic material to some degree. Therefore, primer compositions for priming substrates such as PVC or ABS available on the market at present all include NMP or NEP.

However, aggressive solvents such as NMP or NEP are hazardous substances. Therefore, their use is meanwhile undesired. Rather, in 2015 these solvents will be classified as highly dangerous and will be declared as carcinogenic. Thus, there is a strong need in the art for primer compositions suitable for priming difficult to bond materials such as PVC or ABS being free of aggressive hazardous substances such as NEP or NMP.

US 2014/182620 A1 discloses an eco-friendly thinner/detergent based on 2,5,7,10-tetraoxaundecane (TOU) as a non-volatile polyacetal.

US 2014/262020 A1 discloses primer compositions which contain N methylpyrrolidone (NMP) and a thermoplastic polyurethane and which are suitable for adhering two sheets of polymer material.

DE 10 2009 045025 A1 discloses primer compositions which contain water, NMP and thermoplastic polyurethane and are suitable for adhering flexible substrates being coated with a polyurethane hot melt adhesive.

### SUMMARY OF THE INVENTION

The object of the present invention is to meet the above need. In particular, the object of the present invention is the provision of a primer composition suitable for priming difficult to bond substrates such as PVC or ABS, while avoiding the use of hazardous solvents such as NMP and NEP.

The present invention provides a primer composition, comprising (a) 2,5,7,10-tetraoxaundecane (TOU), and (b) a polymer selected from the group consisting of polyester (PES), thermoplastic polyurethane (TPU) and chlorinated polyvinyl chloride (CPVC). In certain embodiments, the primer composition further comprises (c) 1,3-dioxolane.

The inventors of the present invention have found that compositions comprising TOU and optionally but preferably 1,3-dioxolane effectively can prime substrates such as PVC or ABS for improving adhesive bonding even without using hazardous substances such as NEP and NMP. Therefore, the primer compositions according to the present invention are typically free of NMP or NEP. In certain embodiments, the primer compositions are free of NMP, NEP, or any other N-alkyl pyrrolidone derivative. In a preferred embodiment, the primer composition of the present invention is further free of tetrahydrofurane (THF) and toluene.

Accordingly, the present invention also relates to a method of surface-treating a substrate to improve adhesive bonding thereto, the method comprising applying a layer of a primer composition according to the present invention described above to a surface of the substrate to be treated, and drying the composition to form a primer coating.

The present invention further provides an article comprising a substrate having at least one surface, and a layer of the primer composition according to the invention coated or applied on the at least one surface of the substrate.

Further embodiments of the present invention are apparent from the appended claims or the following detailed description.

### DETAILED DESCRIPTION OF THE INVENTION

In principle, primer compositions can be classified into solvent borne primer compositions and water borne primer compositions. The present invention relates to solvent borne or solvent based primer compositions.

The solvent based primer composition according to the present invention comprises (a) 2,5,7,10-tetraoxaundecane (TOU), and dissolved therein (b) a polymer selected from the group consisting of polyester (PES), thermoplastic polyurethane (TPU) and chlorinated polyvinyl chloride (CPVC). Optionally but preferably, the primer composition further comprises (c) 1,3-dioxolane.

2,5,7,10-Tetraoxaundecane (molecular formula C₇H₁₆O₄) is an acetal type solvent typically used in the field of cleansing products. In the present invention the compound is also referred to as TOU. The chemical structure of TOU is shown below.

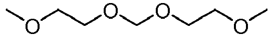

The inventors of the present invention have found that TOU is suitable to replace hazardous substances such as NMP or NEP typically used in conventional primer compositions. Thus, the primer composition of the present invention comprises TOU, while the inventive primer composition is typically free of NMP, NEP or any other N-alkyl pyrrolidone derivative. In addition, the primer composition of the present invention can be and preferably is further free of THF and toluene.

Based on the total weight of the composition, the primer composition of the invention comprises in certain embodiments at least 40% by weight of TOU. In a preferred embodiment, the primer composition according to the invention may comprise from 45% by weight to 97% by weight of TOU, based on the total weight of the composition. For example, the primer composition may comprise TOU in an amount of from 50% by weight to 93% by weight, such as from 85% to 92.9% by weight, 85% to 92.5% by weight, or 85% to 92% by weight.

The primer composition of the present invention may further comprise 1,3-dioxolane. The inventors of the present invention have found that TOU especially in combination with 1,3-dioxolane is particularly effective for priming difficult to bond substrates such as PVC or ABS even without using hazardous solvents such as NEP or NMP.

In certain embodiments, the primer composition comprises, based on the total weight of the composition, 1,3-dioxolan in an amount of up to 25% by weight. In some embodiments, 1,3-dioxolane is comprised in the primer composition according to the invention in an amount of from 2% by weight to 15% by weight. For example, in certain embodiments, 1,3-dioxolane is employed in an amount of from 5% by weight to 10% by weight, based on the total weight of the composition.

In other embodiments, the parts of the TOU and, if present, 1,3-dioxolane in the above-described primer compositions according to the invention is replaced with an organic solvent having a low vapour pressure. In this way, primer compositions having a low content of volatile organic compounds (VOC) can be obtained. Primer compositions complying with the requirements according to EU directive 1999/13/EC can be provided according to this embodiment. In such primer compositions the total amount of TOU and 1,3-dioxolane is less than 50% by weight, preferably is from 40% by weight to 49% by weight. The weight ratio of TOU to 1,3-dioxolane is preferably 30:1 to 5:1, more preferably is 20:1 to 10:1. The low VOC primer compositions according to the present invention comprise a further organic solvent selected from dimethyl glutarate, dimethyl succinate, dimethyl adipate, dimethyl 2-methylglutarate, 2-ethylhexylal and combinations thereof. The total amount of TOU, 1,3-dioxolane and further organic solvent, selected from dimethyl glutarate, dimethyl succinate, dimethyl adipate, dimethyl 2-methylglutarate, 2-ethylhexylal and combinations thereof, in such low VOC primer compositions is 89% by weight to 99% by weight, preferably 90% by weight to 98% by weight. Solvents of low vapour pressure, selected from dimethyl glutarate, dimethyl succinate, dimethyl adipate, dimethyl 2-methylglutarate, 2-ethylhexylal and combinations thereof, are known in the art for use in primer compositions and include e.g. Rhodiasolv RPDE and Rhodiasolv IRIS from Rhodia, FlexiSolv DBE-4 from Invista or 2-Ethylhexylal from Lambiotte.

The primer composition of the present invention further comprises a polymer selected from the group consisting of PES, TPU and CPVC. Addition of polymers such as PES, TPU or CPVC to primer compositions is known in the art from conventional primers. In some embodiments, the primer composition according to the present invention comprises, based on the total weight of the composition, PES, TPU and/or CPVC in an amount of up to 10% by weight. For example, the polymer selected from PES, TPU and CPVC may be included in the inventive primer composition in an amount of from 1% by weight to 8% by weight, such as from 2% by weight to 5% by weight.

In one embodiment, the polymer comprised in the primer composition according to the invention is preferably PES.

Furthermore, in such embodiments, the PES may have a softening point (Ring & Ball) measured according to DIN ISO 4625 of e.g. 60°C to 160°C. Preferably, the PES has a softening point of 80°C to 140°C.

In addition, the PES may have a glass transition temperature (DSC) measured according to DIN 53765 of 10°C or lower. Preferably, the PES has a glass transition temperature of 0°C or lower.

Polyesters suitable according to the present invention are known in the art. Suitable PES are typically substantially linear or linear. In addition, the PES typically has some crystallinity such as a slight crystallinity. Useful commercially available hydroxyl terminated polyester materials include various saturated linear, semi-crystalline copolyesters available from EVONIK INDUSTRIES such as Dynacoll® S 1272, Dynacoll® S 1401 or Dynacoll® S 1402; or Vitel® 7400 or Estergran® 1405 from BOSTIK.

In other embodiments, the primer composition of the present invention comprises, alternatively or in addition to PES, thermoplastic polyurethane (TPU). Thermoplastic polyurethanes suitable according to the present invention are known in the art. Suitable thermoplastic polyurethanes are typically substantially linear or linear. Such thermoplastic polyurethanes are derived from substantially linear or linear polyols, e.g. polyesterpolyols, polyetherpolyols or polycaprolactonepolyols, on the one hand and substantially linear or linear polyisocyanates on the other hand.

Furthermore, suitable thermoplastic polyurethanes normally have a noticeable or high tendency to crystallize. In a preferred embodiment, the TPU suitable according to the invention has a crystallization rate measured according to DIN 53505 of 60 minutes or lower, preferably 40 minutes or lower, such as e.g. 25 minutes to 35 minutes.

Thermoplastic polyurethanes are also called thermoplastic polyurethane elastomers because they are highly elastic. The thermoplastic polyurethanes include linear or substantially linear polymeric chains combined in block-structures. These block-structures contain low-polarity segments that are relatively long and that are called soft segments. The soft segments are covalently bonded to shorter, high-polarity "hard" segments. Useful thermoplastic polyurethanes include the reaction products of at least one soft segment (e.g., polyether, polyester and polycaprolactone) and an isocyanate, e.g., methylene diphenyl diisocyanate (MDI). More information about thermoplastic polyurethanes can be found in "Thermoplastic Polyurethanes: Chemistry Opens Up New Opportunities", Urethane Technology, pp. 24, 26, December 1997/January 1998.

Useful thermoplastic polyurethanes are e.g. available under the trade name Pearlstick®, such as for example Pearlstick® 46-10 from MERQUINSA located in Barcelona, Spain; Irostik® S 7514 from HUNTSMAN; Laricol® 1460 from COIM or Estane T5648 from LUBRIZOL.

In further embodiments, the primer composition of the present invention comprises, alternatively or in addition to PES and/or (TPU), chlorinated polyvinyl chloride (CPVC) as at least one polymer. Chlorinated polyvinyl chlorides (CPVC) suitable in primer compositions including the primer compositions of the invention are known in the art. According to the present invention, CPVC is especially suitable in primer compositions for use in edge banding applications. Typically, the CPVC has a chlorine content of 60% by weight to 70% by weight, such as e.g. 63% by weight to 69% by weight.

The primer composition according to the present invention may also comprise usual additives in minor amounts. Additives suitable for use in primer compositions are known in the art. For example, additives such as optical brighteners or UV tracers may optionally be added. Typically, such additives, if present, are used in low amounts, such as less than 1% by weight, less than 0.5% by weight, or less than 0.1% by weight, based on the total weight of the primer composition.

In one embodiment, the primer composition comprises an optical brightener or optical brightening agent (OBA). Optical brighteners are chemical compounds that absorb light in the ultraviolet and violet region (usually 340-370 nm) of the electromagnetic spectrum, and re-emit light in the blue region (typically 420-470 nm). Suitable examples are known to a person skilled in the art. In some embodiments of the present invention, the optical brightener is included in an amount of less than 0.1% by weight, based on the total weight of the primer composition. Illustrative examples of suitable optical brighteners include e.g. Bentex OB available from Mayzo Inc., Uvitex OB available from Ciba Specialty Chemicals, Optiblanc PL from 3V Sigma, or Lunabrite OB.

As mentioned above, the present invention also relates to a method of surface-treating a substrate to improve adhesive bonding thereto. The method of the present invention comprises applying a layer of a primer composition according to the invention as defined above to a surface of the substrate to be treated, and drying the composition to form a primer coating.

The method of applying or coating the primer composition onto the substrate is not particularly limited. For example, the primer composition can be applied as known in the art e.g. with all kind of roller (such as steel or rubber rollers), or combinations with inline and reverse rotation of the roll, by spraying or with a roll coater or coating knife, by contacting with pads or felts having the primer composition applied thereon, a vacuum system, etc. In an illustrative embodiment, the primer composition is dropped onto a revolving felt, and the felt having the primer composition applied thereon is put into contact with the substrate to be treated, thereby applying or coating the primer composition onto the substrate. In this way, some cleaning of the substrate can also be observed.

The drying temperature is not particularly limited. Typically drying can be done by raising the surface temperature of the substrate using e.g. an infrared oven, hot air guns or fans. Typically elevated surface temperatures in the range of 35°C to 120°C, such as 50°C to 80°C may be employed. The drying time is sufficiently long to ensure that the primer composition can interact with the substrate to improve adhesive bonding. This is typically achieved within e.g. less than about a minute, or less than 40 seconds, such as e.g. 5 seconds to 20 seconds, depending on the employed machinery, including speed, number of hot air guns, length of the infrared oven, etc.

Substrates that advantageously can be treated according to the invention include but are not limited to substrates comprising polyvinyl chloride (PVC), acrylonitrile-butadiene-styrene (ABS), polypropylene (PP), polyethylene terephthalate (PET), polyester impregnated paper, or melamine impregnated paper. The primer composition of the present invention is particularly advantageous of priming PVC or ABS, especially PVC.

The primer composition may in one embodiment be applied as a continuous coating. The obtained coating dry weight is preferably 0.01 to 25 g/m². The inventors of the present invention have found that primer compositions according to the present invention are efficient for priming difficult to bond substrates such as PVC even when the inventive primer composition is applied in lower amounts than conventional primer compositions. Therefore, in some embodiments, the primer composition is applied to the substrate so as to obtain a dry coating weight of preferably 0.05 to 15 g/m², more preferably 0.1 to 10 g/m², such as e.g. 0.1 to 7 g/m² or 0.1 to 0.5 g/m².

The present invention also relates to an article comprising a substrate having at least one surface, and a layer of the primer composition according to the invention coated on the at least one surface of the substrate. Suitable substrates already have been discussed above and include but are not limited to substrates comprising e.g. polyvinyl chloride (PVC), acrylonitrile-butadiene-styrene (ABS), polypropylene (PP), polyethylene terephthalate (PET), polyester impregnated paper, or melamine impregnated paper, such as in particular PVC or ABS, especially PVC. Specific examples of the articles according to the invention include but are not limited to an edge band, window profile or PVC-profile.

Adhesives that can advantageously be employed in connection with the primer composition of the invention are not particularly limited as long as a good bonding between adhesive and primer layer is achieved. For example, suitable adhesives may include hot melt adhesives, such as hot melt moisture cure polyurethane adhesives (HMMC), hot melt ethylene-vinylacetate adhesives (HM EVA), or hot melt adhesives based on amorphous poly-alpha-olefins (HM APAO). In some embodiments, the adhesive is a HMMC adhesive.

In an illustrative embodiment, the primer composition according to the invention may be employed for window profile wrapping. Suitable window profiles typically comprise PVC. In such embodiments, it may be preferred that the primer composition comprises 1,3-dioxolane in addition to TOU. The primer composition can be applied to the window profile by pads or felts or a vacuum system. Drying may be achieved by hot air guns or fans until complete dry. Dry coating weights suitable here may be as low as e.g. 7 g/m² or lower, such as 1 g/m² or lower, e.g. 0.1 to 0.5 g/m². In such embodiments, HMMC adhesives may advantageously be employed.

### Working Examples

Suitability of TOU for replacing hazardous substances such as NMP or NEP in primer compositions was tested by immersing for 24 hours at room temperature a substrate specimen having a size of 60x10x1 mm into 20 ml of solvent. The solvent replacing NMP or NEP in the primer composition should show a significant attack on the various substrate materials at least comparable to the results obtained with the hazardous substances NMP or NEP currently in use. The observed results were rated as indicated below:
0 - No attack
1 - Surface slight attack
2 - Swelling of the material
3 - Strong attack with deformation of the material
4 - Completely dissolved

The obtained test results are shown in the following table:

| **SOLVENT** | **MATERIAL** | | |
|---|---|---|---|
| | **PVC** | **ABS** | **PET** |
| **NEP** | 3 | 4 | 1 |
| **NMP** | 1 | 1 | 0 |
| **TOU** | 2 | 4 | 1 |

As can be seen from the above, TOU which is a non-hazardous solvent shows a profile of effect on different substrate materials at least comparable to the hazardous substances to be replaced. Therefore, TOU is suitable to replace NMP or NEP in primer compositions.

### Example 1

A non-hazardous primer composition was obtained by combining TOU, 1,3-dioxolane, and semicrystalline polyester having a glass transition temperature of below 0°C. Vitel 7400 was used as the PES. In addition, optical brightener (Optiplanc PL) was added. The amounts in weight percent shown in the table below are based on the total weight of the primer composition.

| | **Amount [wt.-%]** |
|---|---|
| **TOU** | 92.95 |
| **1,3-Dioxolane** | 5 |
| **PES** | 2 |
| **Optical brightener** | 0.05 |

The above composition was applied to a PVC substrate and dried. Subsequently, a PVC foil was bonded in line to the treated substrate using a HMMC adhesive (Swift® lock 4077 available from HB Fuller). For comparison purposes the same procedure was carried out, except for using a NMP/NEP based standard primer (Swift® prime 4912 available from HB Fuller) instead of the composition according to example 1. For determining efficiency of the primer compositions a peel test according to RAL GZ 716 was done with the obtained laminates. The results are as follows:

| **Sample** | **Peel strength** |
|---|---|
| Swift® prime 4912 (comparative) | 3.5 N/mm, foil break |
| Example 1 | 3.1 N/mm, foil break |

As can be seen from the above, a strong adhesion is obtained with the primer composition according to the invention comparable to the adhesion obtained with NEP/NMP based primers. Thus, the compositions according to the invention are suitable as primer compositions even when the use of hazardous substances such as NMP and NEP typically employed in conventional primers is avoided.

## Claims

1. A primer composition, comprising
(a) 2,5,7,10-tetraoxaundecane (TOU), and
(b) a polymer, wherein the polymer is selected from the group consisting of polyester (PES), thermoplastic polyurethane (TPU) and chlorinated polyvinyl chloride (CPVC).

2. The primer composition according to claim 1, wherein the composition is free of N-methyl-pyrrolidone (NMP) or N-ethyl-pyrrolidone (NEP), and preferably is free of N-methyl-pyrrolidone (NMP) and N-ethyl-pyrrolidone (NEP).

3. The primer composition according to claim 1 or 2, further comprising
(c) 1,3-dioxolane.

4. The primer composition according to any one of claims 1 to 3, wherein the polymer is a polyester (PES).

5. The primer composition according to claim 4, wherein the PES has
a softening point measured according to DIN ISO 4625 of 60°C to 160°C, preferably of 80°C to 140°C; and/or
a glass transition temperature measured according to DIN 53765 of 10°C or lower, preferably 0°C or lower.

6. The primer composition according to any one of claims 1-5, wherein the composition comprises, based on the total composition
(a) the 2,5,7,10-tetraoxaundecane (TOU) in an amount of at least 40% by weight, preferably from 45% by weight to 97% by weight, more preferably from 50% by weight to 93% by weight; and/or
(b) the polymer in an amount of up to 10% by weight, preferably from 1% by weight to 8% by weight, more preferably from 2% by weight to 5% by weight; and/or
(c) 1,3-dioxolan in an amount of up to 25% by weight, preferably from 2% by weight to 15% by weight, more preferably from 5% by weight to 10% by weight.

7. The primer composition according to any one of claims 1-5, wherein the composition comprises, based on the total composition
(a) a total amount of TOU and 1,3-dioxolane of less than 50% by weight, preferably from 40% by weight to 49% by weight, wherein the weight ratio of TOU to 1,3-dioxolane is preferably 30:1 to 5:1, more preferably 20:1 to 10:1;
(b) the polymer in an amount of up to 10% by weight, preferably from 1% by weight to 8% by weight, more preferably from 2% by weight to 5% by weight; and
(c) a further organic solvent selected from dimethyl glutarate, dimethyl succinate, dimethyl adipate, dimethyl 2-methylglutarate, 2-ethylhexylal and combinations thereof,
wherein the total amount of TOU, 1,3-dioxolane and further organic solvent is 89% by weight to 99% by weight, preferably 90% by weight to 98% by weight.

8. A method of surface-treating a substrate to improve adhesive bonding thereto, the method comprising
applying a layer of a primer composition as defined in any one of claims 1-7 to a surface of the substrate to be treated, and
drying the composition to form a primer coating.

9. The method of claim 8, wherein the substrate comprises polyvinyl chloride (PVC), acrylonitrile-butadiene-styrene (ABS), polypropylene (PP), polyethylene terephthalate (PET), polyester impregnated paper, or melamine impregnated paper, and preferably comprises PVC or ABS, more preferably PVC.

10. The method according to claim 8 or 9, wherein the primer composition is applied to obtain a coating dry weight of 0.01 to 25 g/m², preferably 0.05 to 15 g/m², more preferably 0.1 to about 10 g/m².

11. An article comprising
a substrate having at least one surface, and
a layer of the primer composition as defined in any one of claims 1-6 coated on the at least one surface of the substrate.

12. The article of claim 11, wherein the substrate comprises polyvinyl chloride (PVC), acrylonitrile-butadiene-styrene (ABS), polypropylene (PP), polyethylene terephthalate (PET), polyester impregnated paper, or melamine impregnated paper, and preferably comprises PVC or ABS, more preferably PVC.

13. The article of claim 11 or 12, wherein the article comprises edge band, window profile or PVC-profile, preferably window profile.

14. The article of any one of claims 11-13, wherein the article further comprises an adhesive, preferably a hot melt adhesive, more preferably a hot melt adhesive selected hot melt moisture cure polyurethane adhesives (HMMC), hot melt ethylene-vinylacetate adhesives (HM EVA), and hot melt adhesives based on amorphous poly-alpha-olefins (HM APAO), wherein still more preferably the adhesive is a HMMC adhesive.

## Patentansprüche

1. Eine Grundierungszusammensetzung, umfassend
(a) 2,5,7,10-Tetraoxaundecan (TOU), und
(b) ein Polymer, wobei das Polymer ausgewählt ist aus der Gruppe bestehend aus Polyester (PES), thermoplastisches Polyurethan (TPU) und chloriertes Polyvinylchlorid (CPVC).

2. Die Grundierungszusammensetzung nach Anspruch 1, wobei die Zusammensetzung frei von N-Methyl-pyrrolidon (NMP) oder N-Ethyl-pyrrolidon (NEP) ist, und vorzugsweise frei von N-Methyl-pyrrolidon (NMP) und N-Ethyl-pyrrolidon (NEP) ist.

3. Die Grundierungszusammensetzung gemäß Anspruch 1 oder 2, ferner umfassend
(c) 1,3-Dioxolan.

4. Die Grundierungszusammensetzung gemäß einem der Ansprüche 1 bis 3, wobei das Polymer ein Polyester (PES) ist.

5. Die Grundierungszusammensetzung gemäß Anspruch 4, wobei das PES einen Erweichungspunkt gemessen nach DIN ISO 4625 von 60°C bis 160°C aufweist, vorzugsweise von 80°C bis 140°C; und/oder
eine Glasübergangstemperatur gemessen gemäß DIN 53765 von 10°C oder weniger, vorzugsweise 0°C oder weniger.

6. Die Grundierungszusammensetzung gemäß einem der Ansprüche 1-5, wobei die Zusammensetzung umfasst, basierend auf der Gesamtzusammensetzung,
(a) das 2,5,7,10-Tetraoxaundecan (TOU) in einer Menge von mindestens 40 Gew.-%, vorzugsweise von 45 Gew.-% bis 97 Gew.-%, insbesondere bevorzugt von 50 Gew.-% bis 93 Gew.-%; und/oder
(b) das Polymer in einer Menge von bis zu 10 Gew.-%, vorzugsweise von 1 Gew.-% bis 8 Gew.-%, insbesondere bevorzugt von 2 Gew.-% bis 5 Gew.-%; und/oder
(c) 1,3-Dioxolan in einer Menge von bis zu 25 Gew.-%, vorzugsweise von 2 Gew.-% bis 15 Gew.-%, insbesondere bevorzugt von 5 Gew.-%t bis 10 Gew.-%.

7. Die Grundierungszusammensetzung gemäß einem der Ansprüche 1-5, wobei die Zusammensetzung umfasst, basierend auf der Gesamtzusammensetzung
(a) eine Gesamtmenge von TOU und 1,3-Dioxolan von weniger als 50 Gew.-%, vorzugsweise von 40 Gew.-% bis 49 Gew.-%, wobei das Gewichtsverhältnis von TOU zu 1,3-Dioxolan vorzugsweise 30:1 bis 5:1 beträgt, insbesondere bevorzugt 20:1 bis 10:1;
(b) das Polymer in einer Menge von bis zu 10 Gew.-%, vorzugsweise von 1 Gew.-% bis 8 Gew.-%, insbesondere bevorzugt von 2 Gew.-% bis 5 Gew.-%; und
(c) ein weiteres organisches Lösemittel ausgewählt aus Dimethylglutarat, Dimethylsuccinat, Dimethyladipat, Dimethyl-2-methylglutarat, 2-Ethylhexylal und deren Kombinationen,
wobei die Gesamtmenge an TOU, 1,3-Dioxolan und weiteren organischen Lösemitteln 89 Gew.-% bis 99 Gew.-%, vorzugsweise 90 Gew.-% bis 98 Gew.-% beträgt.

8. Ein Verfahren zur Oberflächenbehandlung eines Substrats zur Verbesserung der Klebstoffbindung darauf, das Verfahren umfassend
Aufbringen einer Schicht aus einer Grundierungszusammensetzung wie in einem der Ansprüche 1 bis 7 definiert auf eine Oberfläche des zu behandelnden Substrats, und
Trocknen der Zusammensetzung um eine Grundierungsbeschichtung zu bilden.

9. Das Verfahren nach Anspruch 8, wobei das Substrat Polyvinylchlorid (PVC), Acrylnitril-Butadien-Styrol (ABS), Polypropylen (PP), Polyethylenterephthalat (PET), Polyester imprägniertes Papier, oder Melamin-imprägniertes Papier umfasst, vorzugsweise PVC oder ABS, insbesondere bevorzugt PVC umfasst.

10. Das Verfahren nach Anspruch 8 oder 9, wobei die Grundierungszusammensetzung aufgebracht wird um ein Beschichtungstrockengewicht von 0,01 bis 25 g/m², vorzugsweise 0,05 bis 15 g/m², insbesondere bevorzugt 0,1 bis etwa 10 g/m² zu erhalten.

11. Ein Gegenstand umfassend
ein Substrat mit mindestens einer Oberfläche, und
eine Schicht aus der Grundierungszusammensetzung wie in einem der Ansprüche 1 bis 6 definiert beschichtet auf die mindestens eine Oberfläche des Substrates.

12. Der Gegenstand nach Anspruch 11, wobei das Substrat Polyvinylchlorid (PVC), Acrylnitril-Butadien-Styrol (ABS), Polypropylen (PP), Polyethylenterephthalat (PET), Polyester imprägniertes Papier, oder Melamin-imprägniertes Papier umfasst, vorzugsweise PVC oder ABS, insbesondere bevorzugt PVC umfasst.

13. Der Gegenstand nach Anspruch 11 oder 12, wobei der Gegenstand ein Kantenband, Fensterprofil oder PVC-Profil, vorzugsweise ein Fensterprofil umfasst.

14. Der Gegenstand nach einem der Ansprüche 11-13, wobei der Gegenstand ferner einen Klebstoff umfasst, vorzugsweise einen Heißschmelz-Klebstoff, insbesondere bevorzugt einen Heißschmelzklebstoff ausgewählt aus heißschmelzenden Feuchtigkeits-härtenden Polyurethan Klebstoffen (HMMC), Heißschmelz-Ethylenvinylacetat Klebstoffen (HM EVA), und Heißschmelzklebstoffen basierend auf amorphen Poly-alpha-Olefinen (HM APAO), wobei insbesondere bevorzugt der Klebstoff ein HMMC Klebstoff ist.

## Revendications

1. Composition d'apprêt, comprenant
a) du 2,5,7,10-tétraoxaundécane (TOU), et
(b) un polymère, le polymère étant choisi dans le groupe constitué par le polyester (PES), le polyuréthane thermoplastique (TPU) et le chlorure de polyvinyle chloré (CPVC).

2. La composition d'apprêt selon la revendication 1, dans laquelle la composition est exempte de N méthyl-pyrrolidone (NMP) ou de N-éthyl-pyrrolidone (NEP), et est de préférence exempte de N-méthyl-pyrrolidone (NMP) et de N-éthyl-pyrrolidone (NEP).

3. La composition d'apprêt selon la revendication 1 ou la revendication 2, comprenant en outre
c) du 1,3-dioxolane.

4. La composition d'apprêt selon l'une quelconque des revendications 1 à 3, dans laquelle le polymère est un polyester (PES).

5. La composition d'apprêt selon la revendication 4, dans laquelle le PES a
un point de ramollissement mesuré selon DIN ISO 4625 de 60° C à 160° C, de préférence de 80° C à 140° C ; et / ou
une température de transition vitreuse mesurée selon DIN 53765 de 10° C ou moins, de préférence de 0° C ou moins.

6. La composition d'apprêt selon l'une quelconque des revendications 1 à 5, dans laquelle la composition comprend, par rapport à la composition totale
(a) du 2,5,7,10-tétraoxaundécane (TOU) en une quantité d'au moins 40% en poids, de préférence allant de 45% en poids à 97% en poids, de façon encore préférée allant de 50% en poids à 93% en poids ; et / ou
(b) le polymère en une quantité allant jusqu'à 10% en poids, de préférence allant de 1% en poids à 8% en poids, de façon encore préférée allant de 2% en poids à 5% en poids ; et / ou
(c) du 1,3-dioxolane en une quantité allant jusqu'à 25% en poids, de préférence allant de 2% en poids à 15% en poids, de façon encore préférée allant de 5% en poids à 10% en poids.

7. La composition d'apprêt selon l'une quelconque des revendications 1 à 5, dans laquelle la composition comprend, par rapport à la composition totale
(a) une quantité totale de TOU et de 1,3-dioxolane inférieure à 50% en poids, de préférence allant de 40% en poids à 49% en poids, le rapport pondéral de TOU au 1,3-dioxolane étant de préférence de 30:1 à 5:1, de façon encore préférée 20:1 à 10:1 ;
(b) le polymère en une quantité allant jusqu'à 10% en poids, de préférence allant de 1% en poids à 8% en poids, de façon encore préférée allant de 2% en poids à 5% en poids ; et
(c) un autre solvant organique choisi parmi le glutarate de diméthyle, le succinate de diméthyle, l'adipate de diméthyle, le 2-méthylglutarate de diméthyle, le 2-éthylhexylal et les combinaisons de ceux-ci,
la quantité totale de TOU, de 1,3-dioxolane et de solvant organique supplémentaire étant de 89% en poids à 99% en poids, de préférence de 90% en poids à 98% en poids.

8. Un procédé de traitement de surface d'un substrat pour améliorer la liaison adhésive à celui-ci, le procédé comprenant
le fait d'appliquer une couche d'une composition d'apprêt telle que définie dans l'une quelconque des revendications 1 à 7 sur une surface du substrat à traiter, et
le fait de sécher la composition pour former un revêtement d'apprêt.

9. Le procédé selon la revendication 8, dans lequel le substrat comprend du polychlorure de vinyle (PVC), de l'acrylonitrile-butadiène-styrène (ABS), du polypropylène (PP), du polyéthylène téréphtalate (PET), du papier imprégné de polyester ou du papier imprégné de mélamine, et comprend de préférence du PVC ou de l'ABS, de façon encore préférée, du PVC.

10. Le procédé selon la revendication 8 ou la revendication 9, dans lequel la composition d'apprêt est appliquée pour obtenir un poids sec de revêtement allant de 0,01 à 25g/m², de préférence allant de 0,05 à 15g/m², de façon encore préférée, allant de 0,1 à environ 10g/m².

11. Un article comprenant
un substrat ayant au moins une surface, et
une couche de la composition d'apprêt telle que définie dans l'une quelconque des revendications 1 à 6 appliquée sur ladite au moins une surface du substrat.

12. L'article selon la revendication 11, dans lequel le substrat comprend du chlorure de polyvinyle (PVC), de l'acrylonitrile-butadiène-styrène (ABS), du polypropylène (PP), du polyéthylène téréphtalate (PET), du papier imprégné de polyester ou du papier imprégné de mélamine et comprend de préférence du PVC ou de l'ABS, de façon encore préférée, du PVC.

13. L'article selon la revendication 11 ou la revendication 12, dans lequel l'article comprend une bande de bordure, un profil de fenêtre ou un profil en PVC, de préférence un profil de fenêtre.

14. L'article selon l'une quelconque des revendications 11 à 13, dans lequel l'article comprend en outre un adhésif, de préférence un adhésif thermofusible, de façon encore préférée un adhésif thermofusible sélectionné parmi des adhésifs polyuréthanes thermodurcissables à chaud (HMMC), des adhésifs thermofusibles éthylène-acétate de vinyle (HM EVA) et des adhésifs thermofusibles à base de poly-alpha-oléfines amorphes (HM APAO), l'adhésif étant, de façon encore préférée, un adhésif HMMC.
